# EUROPEAN PATENT APPLICATION

(11) **EP 4 807 962 A1**
(43) Date of publication of application: **16.09.2026**
(21) Application number: 25789174.7
(22) Date of filing: 21.01.2025
(51) Int. Cl.: H02M 1/32, H02M 7/5387

(54) **RESONANT CONVERTER**

(30) Priority: 19.04.2024 CN 202410474387; 22.07.2024 WO PCT/CN2024/106759
(71) Applicant: Shanghai Moorewatt Energy Technology Co., Ltd., Shanghai 200131 (CN)
(72) Inventor: HOU, Kun, Shanghai 200131 (CN); XU, Rong, Shanghai 200131 (CN)
(74) Representative: Zacco Sweden AB
(86) International application number: PCT/CN2025/073718
(87) International publication number: WO 2025/218301

(57) **Abstract**

The present disclosure relates to a resonant converter. The resonant converter comprises a direct-current side bridge arm circuit, a transformer, an alternating-current side half-bridge circuit, a filter capacitor, and a controller; the alternating-current side half-bridge circuit comprises an upper bridge arm circuit, a lower bridge arm circuit, and a resonant capacitor; the transformer has one end connected to the direct-current side bridge arm circuit and the other end connected to the alternating-current side half-bridge circuit; the filter capacitor is connected in parallel to an output end of the alternating-current side half-bridge circuit, and the capacitance value of the filter capacitor is greater than that of the resonant capacitor; and the controller is used for acquiring the current polarity of an alternating-current side grid voltage in response to a wave blocking signal corresponding to the resonant converter, and controlling the alternating-current side half-bridge circuit to operate according to a target freewheeling path corresponding to the current polarity, so as to transfer leakage inductance energy to the filter capacitor. By using the resonant converter, the problem of voltage stress in the alternating-current side half-bridge circuit during wave blocking can be solved, avoiding damage to an alternating-current side switching device.

## Description

### RELATED APPLICATIONS

The present disclosure claims the priority of Chinese patent application No. 2024104743878, filed on April 19, 2024, entitled "CONVERTER BLOCKING CONTROL METHOD, CONVERTER AND CHIP," which is hereby incorporated by reference in its entirety; and the present application claims the priority of PCT International Application No. PCT/CN2024/106759, filed on July 22, 2024, entitled "CONVERTER BLOCKING CONTROL METHOD, CONVERTER AND CHIP," which is hereby incorporated by reference in its entirety.

### TECHNICAL FIELD

The present disclosure relates to the field of converter control technology, and in particular to a resonant converter.

### BACKGROUND

When blocking a converter whose AC side adopts a half-bridge circuit, if all switching transistors on the AC side are turned off directly, there is no release path for the energy stored in the transformer leakage inductance, which may easily cause overvoltage stress and other problems of the AC-side half-bridge circuit of the converter connected to the grid side, thus resulting in damages to the AC-side switching devices.

Therefore, there is an urgent need for a converter blocking control method to solve the problem of voltage stress of the AC-side half-bridge circuit during blocking, thereby avoiding damages to the AC-side switching devices.

### SUMMARY

In view of this, it is necessary to provide a resonant converter capable of solving a voltage stress risk of an AC-side half-bridge circuit during blocking.

A first aspect of the present disclosure provides a resonant converter, including a direct-current (DC)-side bridge-arm circuit, a transformer, an alternating-current (AC)-side half-bridge circuit, a filter capacitor, and a controller.

The AC-side half-bridge circuit includes an upper bridge arm circuit, a lower bridge arm circuit, and resonant capacitors.

One end of the transformer is connected to the DC-side bridge-arm circuit, and another end of the transformer is connected to the AC-side half-bridge circuit.

The filter capacitor is connected in parallel to output terminals of the AC-side half-bridge circuit, and a capacitance value of the filter capacitor is greater than a capacitance value of each of the resonant capacitors.

The controller is configured to obtain a current polarity of an AC-side grid voltage, in response to a blocking signal corresponding to the resonant converter, and control the AC-side half-bridge circuit to operate according to a target freewheeling path corresponding to the current polarity to transfer leakage inductance energy to the filter capacitor.

In an embodiment, a ratio of the capacitance value of the filter capacitor to the capacitance value of each of the resonant capacitors is greater than 10.

In an embodiment, the upper bridge arm circuit of the AC-side half-bridge circuit comprises a first switching device and a second switching device, the lower bridge arm circuit of the AC-side half-bridge circuit comprises a third switching device and a fourth switching device, and the second switching device and the third switching device are each connected to a midpoint between bridge arms of the AC-side half-bridge circuit.

In an embodiment, the resonant converter further includes a filter impedance; and a filter circuit comprises the filter impedance and the filter capacitor.

In an embodiment, the controller being configured to obtain the current polarity of the AC-side grid voltage, in response to the blocking signal corresponding to the converter, and control the AC-side half-bridge circuit to operate according to the target freewheeling path corresponding to the current polarity, includes:
the controller being configured to: when the current polarity is positive, control a first switching device group to be turned on, and simultaneously control a second switching device group to be turned off; and when the current polarity is negative, control the second switching device group to be turned on, and simultaneously control the first switching device group to be turned off.

The first switching device group includes two switching devices in the AC-side half-bridge circuit, and the second switching device group comprises other two switching devices in the AC-side half-bridge circuit.

In an embodiment, the controller being configured to obtain the current polarity of the AC-side grid voltage, in response to the blocking signal corresponding to the converter, and control the AC-side half-bridge circuit to operate according to the target freewheeling path corresponding to the current polarity, includes: the controller being configured to: when the current polarity is positive, control the second switching device and the fourth switching device to be turned on, and simultaneously control the first switching device and the third switching device to be turned off; and when the current polarity is negative, control the first switching device and the third switching device to be turned on, and simultaneously control the second switching device and the fourth switching device to be turned off.

In an embodiment, the controller being configured to obtain the current polarity of the AC-side grid voltage, in response to the blocking signal corresponding to the converter, includes: the controller being configured to: obtain a current phase of the AC-side grid voltage, and determine the current polarity according to the current phase.

In an embodiment, the controller being configured to obtain the current polarity of the AC-side grid voltage, in response to the blocking signal corresponding to the converter, includes: the controller being configured to: obtain a current instantaneous voltage of the AC-side grid voltage, and determine the current polarity according to the instantaneous voltage.

In an embodiment, the controller is further configured to, after controlling the AC-side half-bridge circuit to operate according to the target freewheeling path for a preset duration, control all switching devices of the AC-side half-bridge circuit to be turned off.

In an embodiment, the preset duration is in a range from 1 microsecond to 100 milliseconds.

In an embodiment, the target freewheeling path includes a positive freewheeling path and a negative freewheeling path, and the controller is further configured to, after controlling the AC-side half-bridge circuit to operate according to the target freewheeling path corresponding to the current polarity, when detecting that the polarity of the AC-side grid changes, control the target freewheeling path to be switched from the positive freewheeling path to the negative freewheeling path, or control the target freewheeling path to be switched from the negative freewheeling path to the positive freewheeling path.

The above resonant converter, including the DC-side bridge-arm circuit, the transformer, the AC-side half-bridge circuit, the filter capacitor, and the controller. The AC-side half-bridge circuit includes the upper bridge arm circuit, the lower bridge arm circuit, and the resonant capacitors. One end of the transformer is connected to the DC-side bridge-arm circuit, and the other end of the transformer is connected to the AC-side half-bridge circuit. The filter capacitor is connected in parallel to the output terminals of the AC-side half-bridge circuit, and the capacitance value of the filter capacitor is greater than the capacitance value of each of the resonant capacitors. The controller is configured to obtain the current polarity of the AC-side grid voltage, in response to the blocking signal corresponding to the resonant converter, and control the AC-side half-bridge circuit to operate according to the target freewheeling path corresponding to the current polarity to transfer the leakage inductance energy to the filter capacitor. In this way, the leakage inductance energy is stored by using the filter capacitor with a relatively large capacitance, thereby enabling a rapid transfer of the leakage inductance energy, reducing the voltage stress risk to the AC-side switching devices during the blocking process, and improving the operational reliability of the resonant converter. Moreover, when selecting the target freewheeling path, the current polarity of the AC-side grid voltage is taken into account, thereby avoiding a short circuit on the AC-side grid, and ensuring the safety of the blocking control of the resonant converter.

### BRIEF DESCRIPTION OF THE DRAWINGS

In order to illustrate the technical solutions in the embodiments of the present disclosure or in the conventional art more clearly, the accompanying drawings required in the description of the embodiments or the related art will be briefly introduced below. Obviously, the drawings in the following description are only embodiments of the present disclosure, and for those of ordinary skill in the art, other drawings can be obtained based on the disclosed drawings without creative efforts.
FIG. 1 is a circuit topology diagram of a single-stage isolated grid-connected inverter according to an embodiment;
FIG. 2 is a circuit topology diagram of the single-stage isolated grid-connected inverter according to another embodiment;
FIG. 3 is a schematic control timing diagram of switching devices in an AC-side half-bridge circuit when a current polarity is positive according to an embodiment;
FIG. 4 is a schematic control timing diagram of the switching devices in the AC-side half-bridge circuit when the current polarity is negative according to an embodiment;
FIG. 5 is a schematic diagram showing a current flow direction of a target freewheeling path when the current polarity is positive according to an embodiment;
FIG. 6 is a schematic diagram showing a current flow direction of another target freewheeling path when the current polarity is positive according to an embodiment;
FIG. 7 is a schematic diagram showing a current flow direction of a target freewheeling path when the current polarity is negative according to an embodiment;
FIG. 8 is a schematic diagram showing a current flow direction of another target freewheeling path when the current polarity is negative according to an embodiment;
FIG. 9 is a schematic control timing diagram of the switching devices in the AC-side half-bridge circuit when the current polarity is positive according to another embodiment;
FIG. 10 is a schematic control timing diagram of the switching devices in the AC-side half-bridge circuit when the current polarity is negative according to another embodiment;
FIG. 11 is a workflow diagram of a converter blocking control method according to an embodiment.

### DETAILED DESCRIPTION OF THE EMBODIMENTS

The technical solutions in the embodiments of the present disclosure will be described clearly and completely hereinafter with reference to the accompanying drawings in the embodiments of the present disclosure. Obviously, the described embodiments are only some, but not all, of the embodiments of the present disclosure. Based on the embodiments in the present disclosure, all other embodiments obtained by those of ordinary skill in the art without creative efforts shall fall within the protection scope of the present disclosure.

Unless otherwise defined, all technical and scientific terms used herein have the same meaning as commonly understood by those of ordinary skill in the art to which the present disclosure belongs. The terms used in the specification of the present disclosure herein are only for the purpose of describing specific embodiments and are not intended to limit the present disclosure.

It can be understood that the terms "first", "second", etc., used in the present disclosure, may be used herein to describe various elements, but these elements are not limited by these terms. These terms are only used to distinguish one element from another. For example, without departing from the scope of the present disclosure, a first resistor may be referred to as a second resistor, and similarly, a second resistor may be referred to as a first resistor. Both the first resistor and the second resistor are resistors, but they are not the same resistor.

It can be understood that the "connection" in the following embodiments, if there are transmissions of electrical signals or data between connected circuits, modules, units, etc., should be understood as "electrical connection", or "communication connection", etc.

It can be understood that the term "based on" as used in the present disclosure is used to describe one or more factors that influence a determination and does not exclude other factors that may influence the determination. For example, the phrase "determining *A* based on *B*" means that the determination of *A* may be based entirely on or at least in part on factor *B*, that is, *B* is a factor that influences the determination of *A*, but does not exclude that the determination of *A* may also be based on *C*.

As used herein, the singular forms "a", "an", and "the" may also include the plural forms unless the context clearly dictates otherwise. It can also be understood that the terms "comprising/including" or "having", etc., specify the presence of stated features, integers, steps, operations, components, parts, or combinations thereof, but do not preclude the possibility of the presence or addition of one or more other features, integers, steps, operations, components, parts, or combinations thereof. Meanwhile, the term "and/or" used in this specification includes any and all combinations of the associated listed items.

A converter blocking control method provided by the embodiments of the present disclosure can be used in a controller of a resonant converter that adopts a half-bridge circuit structure on an alternating-current (AC) side. An upper bridge arm and a lower bridge arm of the half-bridge circuit are both implemented using bidirectional switches. The controller is connected to at least the switching devices in the resonant converter, and is configured to control a switching frequency, a duty cycle, and a phase shift of each switching device. The converter may be a direct-current (DC)-AC converter, such as a single-stage isolated grid-connected inverter, or may be an AC-DC converter, such as a single-stage isolated rectifier.

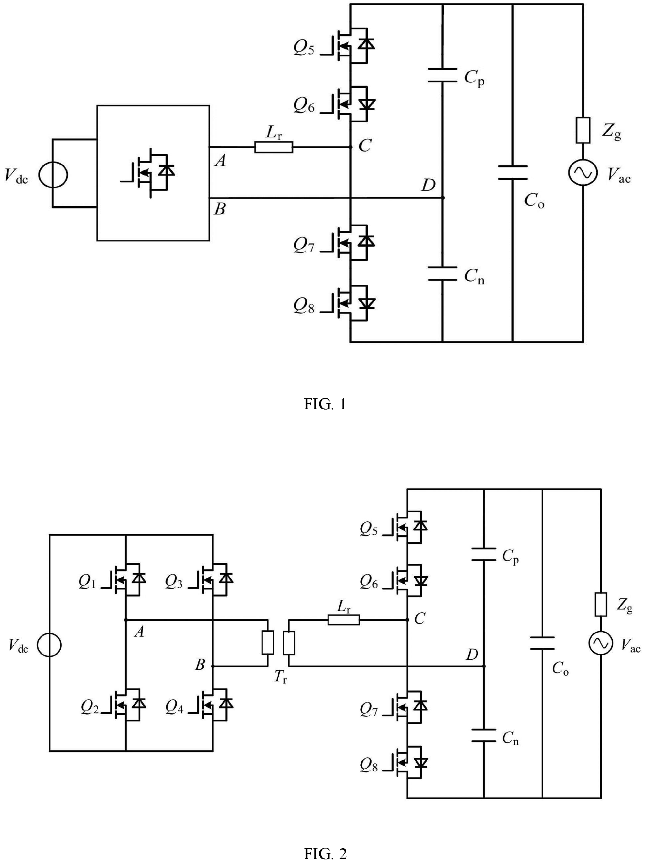

Referring to FIG. 1 and FIG. 2, which show circuit topologies of a single-stage isolated grid-connected inverter, in the figures, *V*_{dc} represents a DC-side power supply voltage, and *V*_{ac} represents an AC-side grid voltage. An AC-side half-bridge circuit includes an upper bridge arm circuit, a lower bridge arm circuit, a resonant capacitor *C*ₚ, and a resonant capacitor *C*ₙ. The upper bridge arm circuit is implemented by a bidirectional switch composed of a switching device Q₅ and a switching device Q₆, and the lower bridge arm circuit is implemented by a bidirectional switch composed of a switching device Q₇ and a switching device Q₈. A midpoint *C* between bridge arms is connected to the leakage inductance *L*ᵣ of the converter. The upper bridge arm circuit corresponds to the resonant capacitor *C*ₚ, and the lower bridge arm circuit corresponds to the resonant capacitor *C*ₙ. The capacitors *C*ₚ and *C*ₙ are connected in series. An intermediate connection point *D* between the resonant capacitor *C*ₚ and the resonant capacitor *C*ₙ is connected to a transformer in the converter. A filter capacitor *C*ₒ is connected in parallel to output terminals of the AC-side half-bridge circuit. A filter circuit includes the filter capacitor *C*ₒ and a filter impedance *Z*_{g}. Exemplarily, the filter impedance *Z*_{g} includes an Electromagnetic Interference (EMI) filter impedance and a grid impedance. In the related art, if the converter is an inverter, the AC side is the output terminal, and the filter capacitor *C*ₒ may also be referred to as an output capacitor.

The controller is not shown in FIG. 1 and FIG. 2. The controller may be implemented using a Microcontroller Unit (MCU) chip, or may be implemented based on a Digital Signal Processor (DSP) chip, a Field-Programmable Gate Array (FPGA), or a custom-designed controller chip. The embodiments of the present disclosure do not limit the specific hardware implementation of the controller.

Referring to FIG. 2, exemplarily, a DC side of the resonant converter, for which the converter blocking control method provided by the embodiments of the present disclosure is used, may be implemented by using an H-bridge circuit. A first bridge arm circuit of the DC-side H-bridge circuit includes switching devices Q₁ and Q₂, and a second bridge arm circuit includes switching devices Q₃ and Q₄. Points *A* and *B* denote load interfaces of the DC-side H-bridge circuit, and *T*ᵣ denotes the transformer.

It should be noted that the embodiments of the present disclosure do not limit the specific circuit structure on the DC side, and FIG. 2 is only an exemplary embodiment.

The switching devices in the embodiments of the present disclosure may also be referred to as power switching transistors. Exemplarily, the switching devices may be Metal-Oxide-Semiconductor Field-Effect Transistors (MOSFETs) or Insulated Gate Bipolar Transistors (IGBTs). The specific types and models of the switching devices are not limited in the present disclosure.

In an exemplary embodiment, the resonant converter includes the AC-side half-bridge circuit, the filter capacitor, and the controller. The filter capacitor is connected in parallel to the output terminals of the AC-side half-bridge circuit. The converter blocking control method provided in an embodiment is used in the controller of the resonant converter. The method includes: obtaining a current polarity of an AC-side grid voltage in response to a blocking signal corresponding to the resonant converter, and controlling the AC-side half-bridge circuit to operate according to a target freewheeling path corresponding to the current polarity, so as to transfer leakage inductance energy to the filter capacitor.

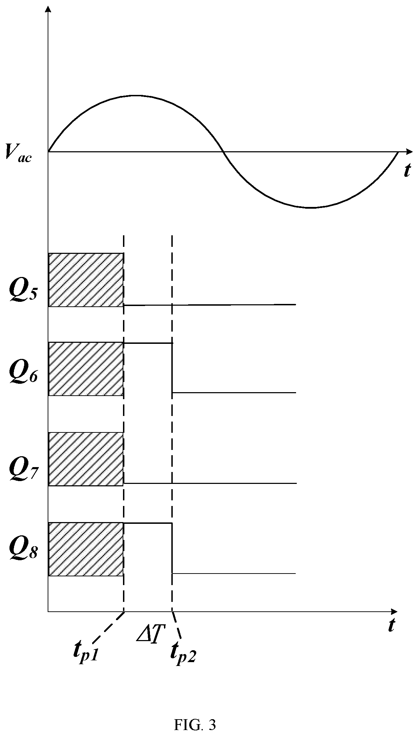

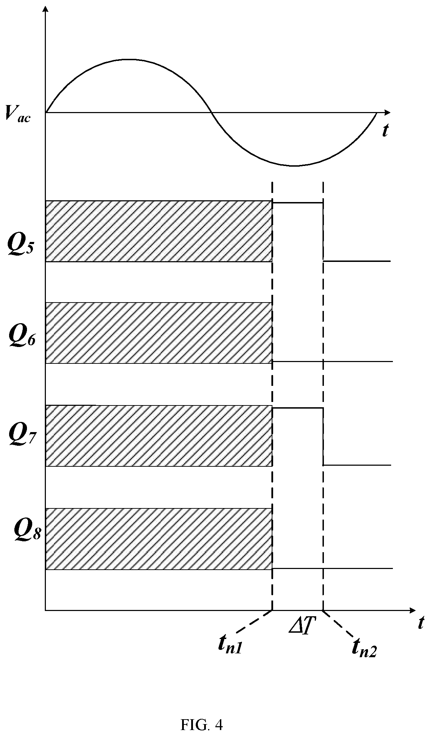

The blocking signal may be a shutdown command based on an external input, or the controller itself may generate the blocking signal when the operating condition of the resonant converter meets a preset shutdown condition, so as to shut down the resonant converter. Referring to FIG. 3 and FIG. 4, a time point *tₚ₁* indicates the instant when the controller starts to respond to the blocking signal to perform a blocking control after receiving the blocking signal while the grid voltage is in a positive half-cycle, and a time point *tₙ₁* indicates the instant when the controller starts to respond to the blocking signal to perform a blocking control after receiving the blocking signal while the grid voltage is in a negative half-cycle.

A target freewheeling path refers to a freewheeling path that can transfer the leakage inductance energy to the filter capacitor. The target freewheeling path is constructed according to the current polarity of the AC-side grid voltage, so that the leakage inductance energy can be quickly transferred to the filter capacitor while avoiding a short circuit on the AC-side grid.

In an embodiment, a process of obtaining the current polarity of the AC-side grid voltage includes: obtaining a current phase of the AC-side grid voltage, and determining the current polarity according to the current phase.

A phase corresponding to the positive polarity is in a range from 0° to 180°, and a phase corresponding to the negative polarity is in a range from 180° to 360°. For any boundary phase of these intervals, such as 0°, 180° or 360°, i.e., a zero-crossing phase of the AC-side grid voltage, the current polarity may be determined as either positive polarity or negative polarity.

In an embodiment, the process of obtaining the current polarity of the AC-side grid voltage includes: obtaining a current instantaneous voltage of the AC-side grid voltage, and determining the current polarity according to the instantaneous voltage.

When the instantaneous voltage is a positive value, the current polarity is positive, and when the instantaneous voltage is a negative value, the current polarity is negative. When the current instantaneous voltage is 0, the current polarity may be determined as either positive polarity or negative polarity.

The filter capacitor is generally a capacitor with a relatively large capacitance, on the order of hundreds of nF (nanofarads) or µF (microfarads), while each resonant capacitor is generally a capacitor with a relatively small capacitance, on the order of tens of nF. In the embodiment, the purpose of constructing the target freewheeling path is to transfer the leakage inductance energy to the filter capacitor. In the related art where the leakage inductance energy is released through the resonant capacitor, since the resonant capacitor has a relatively small energy capacity, the leakage inductance energy is transferred back and forth between the leakage inductance and the resonant capacitor, thus resulting in a relatively slow energy release speed, and causing a relatively large voltage stress risk to the AC-side switching devices during the blocking process. In contrast, in this embodiment, the leakage inductance energy is transferred to the filter capacitor. Since the filter capacitor has a relatively large capacitance, it can quickly absorb the leakage inductance energy, thereby reducing the voltage stress risk to the AC-side switching devices during the blocking process.

In the converter control method provided in the embodiments, the current polarity of the AC-side grid voltage is obtained in response to the blocking signal corresponding to the resonant converter, and the AC-side half-bridge circuit is controlled to operate according to the target freewheeling path corresponding to the current polarity, so as to transfer the leakage inductance energy to the filter capacitor. In this way, the leakage inductance energy is stored by using the filter capacitor with a relatively large capacitance without detecting the magnitude and direction of the leakage inductance current, thereby enabling a rapid transfer of the leakage inductance energy, reducing the voltage stress risk to the AC-side switching devices during the blocking process, and improving the operational reliability of the resonant converter. Moreover, when selecting the target freewheeling path, the current polarity of the AC-side grid voltage is taken into account, thereby avoiding a short circuit on the AC-side grid, and ensuring the safety of the blocking control of the resonant converter.

In an exemplary embodiment, controlling the AC-side half-bridge circuit to operate according to the target freewheeling path corresponding to the current polarity includes: when the current polarity is positive, controlling a first switching device group to be turned on, and simultaneously controlling a second switching device group to be turned off; and when the current polarity is negative, controlling the second switching device group to be turned on, and simultaneously controlling the first switching device group to be turned off.

The first switching device group includes two switching devices in the AC-side half-bridge circuit, and the second switching device group includes the other two switching devices in the AC-side half-bridge circuit.

In an embodiment, the upper bridge arm circuit of the AC-side half-bridge circuit includes a first switching device and a second switching device, the lower bridge arm circuit of the AC-side half-bridge circuit includes a third switching device and a fourth switching device, and the second switching device and the third switching device are each connected to the midpoint between the bridge arms of the AC-side half-bridge circuit. With reference to the circuit topologies shown in FIG. 1 and FIG. 2, the first switching device in the embodiment is the switching device Q₅ in FIG. 1 and FIG. 2, the second switching device is the switching device Q₆ in FIG. 1 and FIG. 2, the third switching device is the switching device Q₇ in FIG. 1 and FIG. 2, and the fourth switching device is the switching device Q₈ in FIG. 1 and FIG. 2.

In an embodiment, the first switching device group includes the second switching device and the fourth switching device, and the third switching device includes the first switching device and the fourth switching device. Controlling the AC-side half-bridge circuit to operate according to the target freewheeling path corresponding to the current polarity includes: when the current polarity is positive, controlling the second switching device and the fourth switching device to be turned on, and simultaneously controlling the first switching device and the third switching device to be turned off; and when the current polarity is negative, controlling the first switching device and the third switching device to be turned on, and simultaneously controlling the second switching device and the fourth switching device to be turned off.

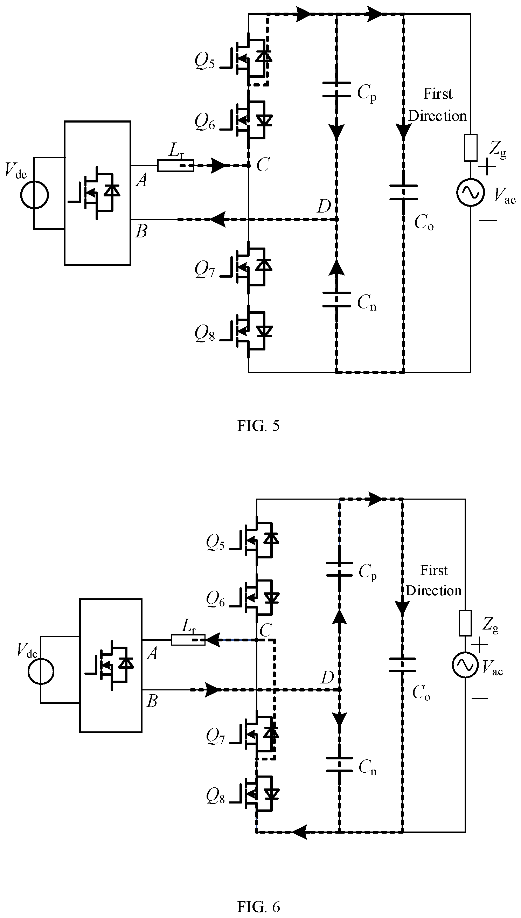

Referring to FIG. 3, FIG. 5 and FIG. 6, FIG. 3 is a schematic control timing diagram of the switching devices in the AC-side half-bridge circuit when the current polarity is positive, and FIG. 5 and FIG. 6 are schematic diagrams showing current flow directions of target freewheeling paths, along which the leakage inductance energy is transferred when the current polarity is positive. As shown in FIG. 3, before a time point *t*ₚ₁, the AC-side grid voltage is in a positive half-cycle. Regardless of whether the AC-side grid voltage is outside the zero-crossing interval, where the control mode of the AC-side half-bridge circuit is the first mode (i.e., the switching device Q₆ and the switching device Q₈ are constantly on, while the switching device Q₅ and the switching device Q₇ are turned on complementarily at high frequency), or whether the AC-side grid voltage is within the zero-crossing interval, where the control mode of the AC-side half-bridge circuit is the second mode (which is not specifically limited in the present disclosure), at the time point *t*ₚ₁, the switching device Q₅ and the switching device Q₇ are controlled to be turned off, and the switching device Q₆ and the switching device Q₈ are controlled to be turned on.

Referring to FIG. 5, at the time point *t*ₚ₁, the current direction at the leakage inductance *L*ᵣ is from the leakage inductance *L*ᵣ to the point C. At this time, along the target freewheeling path, the leakage inductance energy is transferred to the resonant capacitor *C*ₚ and the filter capacitor *C*ₒ through the turned-on switching device Q₆ and an anti-parallel diode of the turned-off switching device Q₅. Since the filter capacitor *C*ₒ has a relatively large capacitance, it can quickly absorb the leakage inductance energy, thereby allowing the AC-side half-bridge circuit to be blocked safely.

Referring to FIG. 6, at the time point *t*ₚ₁, the current direction at the leakage inductance *L*ᵣ is from the point *C* to the leakage inductance *L*ᵣ. At this time, along the target freewheeling path, the leakage inductance energy is transferred to the resonant capacitor *C*ₙ and the filter capacitor *C*ₒ through the turned-on switching device Q₈ and the anti-parallel diode of the turned-off switching device Q₇. Since the filter capacitor *C*ₒ has a relatively large capacitance, it can quickly absorb the leakage inductance energy, thereby allowing the AC-side half-bridge circuit to be blocked safely.

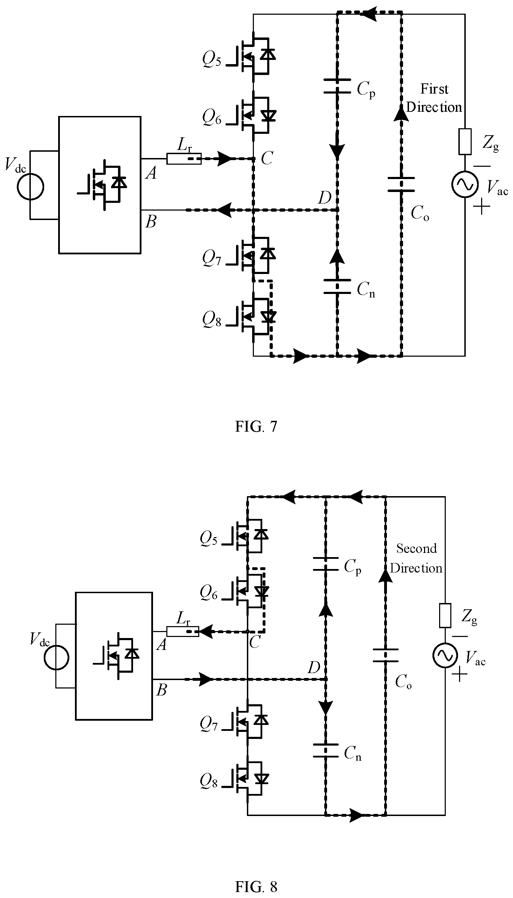

Referring to FIG. 4, FIG. 7 and FIG. 8, FIG. 4 is a schematic control timing diagram of the switching devices in the AC-side half-bridge circuit when the current polarity is negative, and FIG. 7 and FIG. 8 are schematic diagrams showing current flow directions of target freewheeling paths, along which the leakage inductance energy is transferred when the current polarity is negative. As shown in FIG. 4, before a time point *t*ₙ₁, the AC-side grid voltage is in a negative half-cycle. Regardless of whether the AC-side grid voltage is outside the zero-crossing interval, where the control mode of the AC-side half-bridge circuit is the first mode (i.e., the switching device Q₅ and the switching device Q₇ are constantly on, while the switching device Q₆ and the switching device Q₈ are turned on complementarily at high frequency), or whether the AC-side grid voltage is within the zero-crossing interval, where the control mode of the AC-side half-bridge circuit is the second mode, at the time point t₁, the switching device Q₆ and the switching device Q₈ are controlled to be turned off, and the switching device Q₅ and the switching device Q₇ are controlled to be turned on.

Referring to FIG. 7, at time point *t*ₙ₁, the current direction at the leakage inductance *L*ᵣ is from the leakage inductance *L*ᵣ to the point *C*. At this time, along the target freewheeling path, the leakage inductance energy is transferred to the resonant capacitor *C*ₙ and the filter capacitor *C*ₒ through the turned-on switching device Q₇ and an anti-parallel diode of the turned-off switching device Q₈. Since the filter capacitor *C*ₒ has a relatively large capacitance, it can quickly absorb the leakage inductance energy, thereby allowing the AC-side half-bridge circuit to be blocked safely.

Referring to FIG. 8, at the time point *t*ₙ₁, the current direction at the leakage inductance *L*ᵣ is from the point C to the leakage inductance *L*ᵣ. At this time, along the target freewheeling path, the leakage inductance energy is transferred to the resonant capacitor *C*ₚ and the filter capacitor *C*ₒ through the turned-on switching device Q₅ and the anti-parallel diode of the turned-off switching device Q₆. Since the filter capacitor *C*ₒ has a relatively large capacitance, it can quickly absorb the leakage inductance energy, thereby allowing the AC-side half-bridge circuit to be blocked safely.

As can be seen from FIG. 5 and FIG. 6, when the AC-side grid voltage is positive, regardless of whether the current direction at the leakage inductance *L*ᵣ is from the leakage inductance *L*ᵣ to the point C or from the point C to the leakage inductance *L*ᵣ, the filter capacitor *C*ₒ can be continuously charged in a first direction by using the target freewheeling paths provided by the embodiments. Similarly, as can be seen from FIG. 7 and FIG. 8, when the AC-side grid voltage is negative, regardless of whether the current direction at the leakage inductance *L*ᵣ is from the leakage inductance *L*ᵣ to the point C or from the point *C* to the leakage inductance *L*ᵣ, the filter capacitor *C*ₒ can be continuously charged in a second direction by using the target freewheeling path provided by the embodiments. Thus, by using the converter blocking control method provided by the embodiments, the filter capacitor *C*ₒ can be continuously charged in a single charging direction, thereby achieving the effect of quickly transferring the leakage inductance energy to the filter capacitor for storage, reducing the voltage stress risk to the AC-side switching devices during blocking, and improving the operational reliability of the resonant converter. Moreover, in the converter blocking control method provided by the embodiments, it is not required to determine the current direction at the leakage inductance *L*ᵣ at the instant of blocking, thereby avoiding the voltage stress risk to AC-side switching devices caused by a misjudgment of the current direction when selecting a freewheeling path based on the current direction at the leakage inductance *L*ᵣ in related art.

Furthermore, even if the polarity of the AC-side grid voltage is misjudged near the zero-crossing point, because the AC-side voltage value near the zero-crossing point is relatively small, the leakage inductance energy is relatively small, and a short-term short circuit generally does not cause stress risk to the switching devices, and at the same time, the target freewheeling path provided by the embodiments can still ensure bidirectional flow of the leakage inductance energy between the leakage inductance *L*ᵣ and the resonant capacitor *C*ₚ or resonant capacitor *C*ₙ, thereby further avoiding the stress risk to the devices.

In an exemplary embodiment, when it is detected that the current value at the leakage inductance *L*ᵣ is less than a preset threshold, all switching devices of the AC-side half-bridge circuit are controlled to be turned off.

In an exemplary embodiment, a preset duration for a freewheeling operation along the target freewheeling path is preconfigured. After the AC-side half-bridge circuit is controlled to operate according to the target freewheeling path for the preset duration, all switching devices of the AC-side half-bridge circuit are then controlled to be turned off. For example, referring to FIG. 3 and FIG. 4, all switching devices of the AC-side half-bridge circuit are controlled to be turned off at a time point *t*ₚ₂ or at a time point *t*ₙ₂, where ΔT in FIG. 3 and FIG. 4 represents the preset duration.

In an embodiment, the provided converter blocking control method further includes: obtaining a current power value corresponding to the AC-side half-bridge circuit in response to the blocking signal corresponding to the resonant converter; and obtaining the preset duration based on the current power value and the capacitance value of the filter capacitor.

In the embodiment, the preset duration is obtained based on the current power value corresponding to the AC-side half-bridge circuit at the time the blocking signal is received and the capacitance value of the filter capacitor, thereby improving the accuracy of the freewheeling operation duration during the blocking process.

In the converter blocking control method provided by another embodiment, the preset duration for operating according to the target freewheeling path is preconfigured as an empirical value determined based on extensive experiments.

Through circuit principle analysis and extensive experiments, Applicant has found that the preset duration for operating according to the target freewheeling path can be set within a range from 1 µs to 100 ms, which can achieve fast blocking while solving the voltage stress problem of the AC-side half-bridge circuit during blocking, thereby avoiding damages to the AC-side switching devices.

In the embodiment, controlling the operating duration of the freewheeling path based on the determined preset duration, compared with a method of determining when to turn off all switching devices of the AC-side half-bridge circuit by collecting the current value at the leakage inductance *L*ᵣ in real time, eliminates a need for additional current sampling circuits, saves hardware resources, and improves the control efficiency.

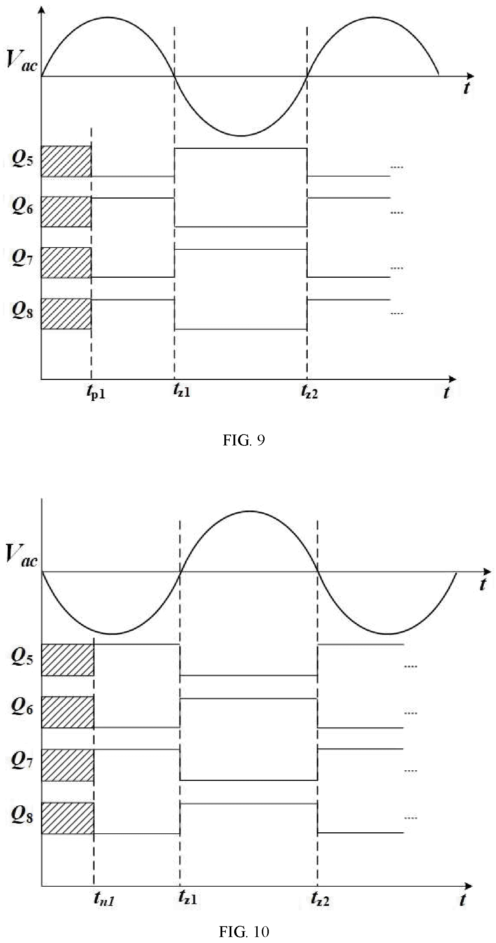

In an embodiment, the target freewheeling path includes a positive freewheeling path and a negative freewheeling path. Referring to FIG. 9 and FIG. 10, after controlling the AC-side half-bridge circuit to operate according to the target freewheeling path corresponding to the current polarity, and when detecting that the polarity of the AC-side grid changes, the controller controls the target freewheeling path to switch from the positive freewheeling path to the negative freewheeling path, or controls the target freewheeling path to switch from the negative freewheeling path to the positive freewheeling path.

Exemplarily, the positive freewheeling path includes the second switching device and the fourth switching device being turned on, and the first switching device and the third switching device being turned off. The negative freewheeling path includes the first switching device and the third switching device being turned on, and the second switching device and the fourth switching device being turned off. Referring to FIG. 9 and FIG. 10, the positive freewheeling path includes the switching device Q₆ and the switching device Q₈ being turned on, and the switching device Q₅ and the switching device Q₇ being turned off. The negative freewheeling path includes the switching device Q₅ and the switching device Q₇ being turned on, and the switching device Q₆ and the switching device Q₈ being turned off.

In an embodiment, as shown in FIG. 9, the time point *t*ₚ₁ indicates the instant of responding to the blocking signal corresponding to the resonant converter. In the embodiment shown in FIG. 9, the blocking signal is received when the grid voltage is in the positive half-cycle. At this time, the current polarity is positive, and the target freewheeling path corresponding to the current polarity is the positive freewheeling path, and the switching device Q₆ and the switching device Q₈ are controlled to be turned on, and the switching device Q₅ and the switching device Q₇ are controlled to be turned off. At a first zero-crossing instant *t*_{z1} after the time point *t*ₚ₁, the target freewheeling path is switched from the positive freewheeling path to the negative freewheeling path, i.e., the switching device Q₅ and the switching device Q₇ are turned on, and the switching device Q₆ and the switching device Q₈ are turned off. At a next zero-crossing instant *t*_{z2} after the zero-crossing instant *t*_{z1}, the target freewheeling path is switched from the negative freewheeling path to the positive freewheeling path, and so on. The target freewheeling path is switched according to changes in the grid voltage polarity.

In an implementation, as shown in FIG. 10, the time point *t*ₙ₁ indicates the instant of responding to the blocking signal corresponding to the resonant converter. In the embodiment shown in FIG. 10, the blocking signal is received when the grid voltage is in a negative half-cycle. At this time, the current polarity is negative, and the target freewheeling path corresponding to the current polarity is the negative freewheeling path, and the switching device Q₅ and the switching device Q₇ are controlled to be turned on, and the switching device Q₆ and the switching device Q₈ are controlled to be turned off. At the first zero-crossing instant *t*_{z1} after the time point *t*ₙ₁, the target freewheeling path is switched from the negative freewheeling path to the positive freewheeling path, and the switching device Q₆ and the switching device Q₈ are controlled to be turned on, and the switching device Q₅ and the switching device Q₇ are controlled to be turned off. At the next zero-crossing instant *t*_{z2} after the zero-crossing instant *t*_{z1}, the target freewheeling path is switched from the positive freewheeling path to the negative freewheeling path, and so on. The target freewheeling path is switched according to changes in the grid voltage polarity.

In the converter control method provided in the above embodiments, after responding to the blocking signal, no preset duration for freewheeling is configured. The target freewheeling path follows changes in the grid voltage polarity, thereby avoiding a short circuit on the AC-side grid after the polarity of the AC-side grid voltage changes, and ensuring the safety and reliability of the grid operation.

In a case where the instant of receiving the blocking signal is proximate to the grid voltage zero-crossing instant, when the grid voltage polarity changes, there may be a situation where not all leakage inductance energy has been transferred to the filter capacitor. By using the converter control method provided in the above embodiments, the target freewheeling path follows changes in the AC-side grid voltage polarity, thereby improving the safety of grid operation during the freewheeling process.

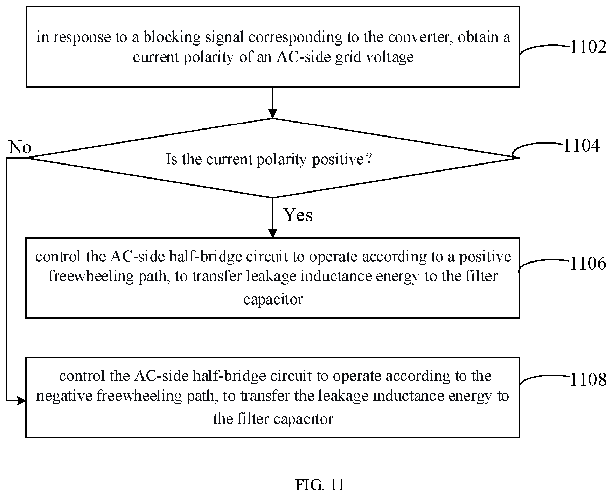

In an exemplary embodiment, a resonant converter includes an AC-side half-bridge circuit, a filter capacitor, and a controller. The filter capacitor is connected in parallel to output terminals of the AC-side half-bridge circuit. An upper bridge arm circuit of the AC-side half-bridge circuit includes a first switching device and a second switching device, and a lower bridge arm circuit of the AC-side half-bridge circuit includes a third switching device and a fourth switching device. The second switching device and the third switching device are each connected to a midpoint between the bridge arms of the AC-side half-bridge circuit. A converter blocking control method provided in an embodiment is used in the controller of the converter. Referring to FIG. 11, the method includes step 1102 to step 1108.

In Step 1102, obtain a current polarity of an AC-side grid voltage in response to a blocking signal corresponding to the converter.

Optionally, a current phase of the AC-side grid voltage is obtained, and the current polarity is determined according to the current phase.

Optionally, a current instantaneous voltage of the AC-side grid voltage is obtained, and the current polarity is determined according to the instantaneous voltage.

In Step 1104, determine whether the current polarity is positive.

In Step 1106, when the current polarity is positive, control the AC-side half-bridge circuit to operate according to a positive freewheeling path to transfer leakage inductance energy to the filter capacitor. The positive freewheeling path includes the first switching device and the third switching device being turned off, and the second switching device and the fourth switching device being turned on.

Optionally, after controlling the AC-side half-bridge circuit to operate according to the positive freewheeling path for a preset duration, the first switching device, the second switching device, the third switching device, and the fourth switching device are controlled to be turned off.

Optionally, after the AC-side half-bridge circuit is controlled to operate according to the positive freewheeling path, when it is detected that the polarity of the AC-side grid changes, the target freewheeling path is switched between the positive freewheeling path and a negative freewheeling path, so that the target freewheeling path matches the grid voltage polarity. The negative freewheeling path includes the first switching device and the third switching device being turned on, and the second switching device and the fourth switching device being turned off.

In Step 1108, when the current polarity is negative, control the AC-side half-bridge circuit to operate according to the negative freewheeling path to transfer the leakage inductance energy to the filter capacitor.

Optionally, after the AC-side half-bridge circuit is controlled to operate according to the negative freewheeling path for the preset duration, the first switching device, the second switching device, the third switching device, and the fourth switching device are controlled to be turned off.

Optionally, after the AC-side half-bridge circuit is controlled to operate according to the negative freewheeling path, when it is detected that the polarity of the AC-side grid changes, the target freewheeling path is switched between the negative freewheeling path and the positive freewheeling path, so that the target freewheeling path matches the grid voltage polarity.

It should be understood that, although various steps in the flowchart according to the above embodiments are sequentially shown as indicated by arrows, these steps are not necessarily sequentially executed in the order indicated by arrows. Unless explicitly stated herein, the order of execution of these steps is not strictly limited, and these steps may be executed in another order, or a plurality of steps may be executed simultaneously. Further, at least some of the steps in the flowchart according to the above embodiments may include a plurality of steps or a plurality of stages, which are not necessarily executed at the same instant, but may be executed at different instants, and the execution order of these steps or stages is not necessarily sequential, but may be alternately or alternately executed with other steps or at least a part of the steps or stages among the other steps.

An embodiment of the present disclosure further provides a resonant converter. The implementation solutions for solving the problem provided by the resonant converter are similar to those described in the above methods. Therefore, for specific limitations in one or more embodiments of the resonant converter provided below, reference may be made to the limitations of the converter control methods described above, which will not be repeatedly described herein. The resonant converter includes a DC-side bridge-arm circuit, a transformer, an AC-side half-bridge circuit, a filter capacitor, and a controller. The AC-side half-bridge circuit includes an upper bridge arm circuit, a lower bridge arm circuit, and resonant capacitors. One end of the transformer is connected to the DC-side bridge-arm circuit, and another end of the transformer is connected to the AC-side half-bridge circuit. The filter capacitor is connected in parallel to output terminals of the AC-side half-bridge circuit, and a capacitance value of the filter capacitor is greater than a capacitance value of each of the resonant capacitors. The controller is configured to obtain a current polarity of an AC-side grid voltage in response to a blocking signal corresponding to the resonant converter, and control the AC-side half-bridge circuit to operate according to a target freewheeling path corresponding to the current polarity to transfer leakage inductance energy to the filter capacitor.

In an exemplary embodiment, a ratio of the capacitance value of the filter capacitor to the capacitance value of each of the resonant capacitors is greater than 10.

In an exemplary embodiment, the upper bridge arm circuit of the AC-side half-bridge circuit includes a first switching device and a second switching device, the lower bridge arm circuit of the AC-side half-bridge circuit includes a third switching device and a fourth switching device, and the second switching device and the third switching device are each connected to a midpoint between bridge arms of the AC-side half-bridge circuit.

In an exemplary embodiment, the resonant converter further includes a filter impedance, and a filter circuit includes the filter impedance and the filter capacitor.

In an exemplary embodiment, the controller being configured to obtain the current polarity of the AC-side grid voltage, in response to the blocking signal corresponding to the converter, and control the AC-side half-bridge circuit to operate according to the target freewheeling path corresponding to the current polarity, includes: the controller being configured to: when the current polarity is positive, control a first switching device group to be turned on, and simultaneously control a second switching device group to be turned off; and when the current polarity is negative, control the second switching device group to be turned on, and simultaneously control the first switching device group to be turned off. The first switching device group includes two switching devices in the AC-side half-bridge circuit, and the second switching device group includes other two switching devices in the AC-side half-bridge circuit.

In an exemplary embodiment, the controller being configured to obtain the current polarity of the AC-side grid voltage, in response to the blocking signal corresponding to the converter, and control the AC-side half-bridge circuit to operate according to the target freewheeling path corresponding to the current polarity, includes: the controller being configured to: when the current polarity is positive, control the second switching device and the fourth switching device to be turned on, and simultaneously control the first switching device and the third switching device to be turned off; and when the current polarity is negative, control the first switching device and the third switching device to be turned on, and simultaneously control the second switching device and the fourth switching device to be turned off.

In an exemplary embodiment, the controller being configured to obtain the current polarity of the AC-side grid voltage, in response to the blocking signal corresponding to the converter, includes: the controller being configured to: obtain a current phase of the AC-side grid voltage, and determine the current polarity according to the current phase.

In an exemplary embodiment, the controller being configured to obtain the current polarity of the AC-side grid voltage, in response to the blocking signal corresponding to the converter, includes: the controller being configured to: obtain a current instantaneous voltage of the AC-side grid voltage, and determine the current polarity according to the instantaneous voltage.

In an exemplary embodiment, the controller is further configured to, after controlling the AC-side half-bridge circuit to operate according to the target freewheeling path for a preset duration, control all switching devices of the AC-side half-bridge circuit to be turned off.

In an exemplary embodiment, the preset duration is in a range from 1 microsecond to 100 milliseconds.

In an exemplary embodiment, the controller is further configured to, after controlling the AC-side half-bridge circuit to operate according to the target freewheeling path corresponding to the current polarity, when detecting that the polarity of the AC-side grid changes, control the target freewheeling path to be switched from the positive freewheeling path to the negative freewheeling path, or control the target freewheeling path to be switched from the negative freewheeling path to the positive freewheeling path.

An embodiment of the present disclosure further provides a chip. The chip includes a memory and a processor. The memory has a computer program stored thereon. The processor, when executing the computer program, performs the steps of the method of any one of the embodiments described above.

In an embodiment, a computer device is further provided, including a memory and a processor. The memory has a computer program stored thereon, and the processor, when executing the computer program, performs the steps of the method of any one of the embodiments described above.

In an embodiment, a computer-readable storage medium is provided, having a computer program stored thereon. The computer program, when executed by a processor, performs the steps of the method of any one of the embodiments described above.

In an embodiment, a computer program product is provided, including a computer program. The computer program, when executed by a processor, performs the steps of the method of any one of the embodiments described above.

It should be noted that the user information (including but not limited to user device information, user personal information, etc.) and data (including but not limited to data for analysis, stored data, displayed data, etc.) involved in the present disclosure are all information and data that have been authorized by the user or fully authorized by all parties, and the collection, use, and processing of relevant data must comply with relevant regulations.

Those of ordinary skill in the art can understand that all or part of the processes in the methods of the above embodiments can be implemented by instructing relevant hardware through a computer program. The computer program can be stored in a non-transitory computer-readable storage medium. The computer program, when executed, can perform the processes of the method of any one of embodiments described above. Any reference to a memory, database, or other media used in the embodiments provided in the present disclosure may include at least one of non-transitory memory and transitory memory. The non-transitory memory may include Read-Only Memory (ROM), magnetic tape, floppy disk, flash memory, optical memory, high-density embedded non-transitory memory, resistive memory (ReRAM), Magneto resistive Random-Access Memory (MRAM), Ferroelectric Random-Access Memory (FRAM), Phase Change Memory (PCM), graphene memory, and the like. Transitory memory may include Random Access Memory (RAM) or external cache memory, etc. By way of illustration and not limitation, RAM may be in various forms, such as Static Random-Access Memory (SRAM) or Dynamic Random-Access Memory (DRAM), etc. The databases involved in the embodiments provided in the present disclosure may include at least one of relational databases and non-relational databases. Non-relational databases may include distributed databases based on blockchain, etc., but are not limited thereto. The processors involved in the embodiments provided in the present disclosure may be general-purpose processors, central processing units, graphics processors, digital signal processors, programmable logic devices, data processing logic devices based on quantum computing, etc., but are not limited thereto.

The technical features of the embodiments above can be combined arbitrarily. For the sake of brevity, not all possible combinations of the technical features in the embodiments above are described. However, as long as there is no contradiction in the combinations of the technical features, these combinations should be considered to be within the scope of the specification.

The embodiments above are merely several implementations of the present disclosure, and the descriptions thereof are relatively specific and detailed, but should not be construed as limiting the scope of the patent application. It should be noted that for those of ordinary skill in the art, various variations and improvements can be made without departing from the concept of the present disclosure, and these variations and improvements all fall within the protection scope of the present disclosure. Therefore, the protection scope of the patent of the present disclosure should be subject to the appended claims.

## Claims

1. A resonant converter, wherein the resonant converter comprises a direct-current (DC)-side bridge-arm circuit, a transformer, an alternating-current (AC)-side half-bridge circuit, a filter capacitor, and a controller;
the AC-side half-bridge circuit comprises an upper bridge arm circuit, a lower bridge arm circuit, and resonant capacitors;
one end of the transformer is connected to the DC-side bridge-arm circuit, and another end of the transformer is connected to the AC-side half-bridge circuit;
the filter capacitor is connected in parallel to output terminals of the AC-side half-bridge circuit, and a capacitance value of the filter capacitor is greater than a capacitance value of each of the resonant capacitors;
the controller is configured to obtain a current polarity of an AC-side grid voltage, in response to a blocking signal corresponding to the resonant converter, and control the AC-side half-bridge circuit to operate according to a target freewheeling path corresponding to the current polarity to transfer leakage inductance energy to the filter capacitor.

2. The resonant converter according to claim 1, wherein a ratio of the capacitance value of the filter capacitor to the capacitance value of each of the resonant capacitors is greater than 10.

3. The resonant converter according to claim 1, wherein the upper bridge arm circuit of the AC-side half-bridge circuit comprises a first switching device and a second switching device, the lower bridge arm circuit of the AC-side half-bridge circuit comprises a third switching device and a fourth switching device, and the second switching device and the third switching device are each connected to a midpoint between bridge arms of the AC-side half-bridge circuit.

4. The resonant converter according to claim 1, wherein the resonant converter further comprises a filter impedance; and a filter circuit comprises the filter impedance and the filter capacitor.

5. The resonant converter according to claim 3, wherein the controller being configured to obtain the current polarity of the AC-side grid voltage, in response to the blocking signal corresponding to the converter, and control the AC-side half-bridge circuit to operate according to the target freewheeling path corresponding to the current polarity, comprises:
the controller being configured to: when the current polarity is positive, control a first switching device group to be turned on, and simultaneously control a second switching device group to be turned off; and when the current polarity is negative, control the second switching device group to be turned on, and simultaneously control the first switching device group to be turned off;
wherein the first switching device group comprises two switching devices in the AC-side half-bridge circuit, and the second switching device group comprises other two switching devices in the AC-side half-bridge circuit.

6. The resonant converter according to claim 3, wherein the controller being configured to obtain the current polarity of the AC-side grid voltage, in response to the blocking signal corresponding to the converter, and control the AC-side half-bridge circuit to operate according to the target freewheeling path corresponding to the current polarity, comprises:
the controller being configured to: when the current polarity is positive, control the second switching device and the fourth switching device to be turned on, and simultaneously control the first switching device and the third switching device to be turned off; and when the current polarity is negative, control the first switching device and the third switching device to be turned on, and simultaneously control the second switching device and the fourth switching device to be turned off.

7. The resonant converter according to claim 1, wherein the controller being configured to obtain the current polarity of the AC-side grid voltage, in response to the blocking signal corresponding to the converter, comprises:
the controller being configured to: obtain a current phase of the AC-side grid voltage, and determine the current polarity according to the current phase.

8. The resonant converter according to claim 1, wherein the controller being configured to obtain the current polarity of the AC-side grid voltage, in response to the blocking signal corresponding to the converter, comprises:
the controller being configured to: obtain a current instantaneous voltage of the AC-side grid voltage, and determine the current polarity according to the instantaneous voltage.

9. The resonant converter according to claim 1, wherein the controller is further configured to, after controlling the AC-side half-bridge circuit to operate according to the target freewheeling path for a preset duration, control all switching devices of the AC-side half-bridge circuit to be turned off.

10. The resonant converter according to claim 9, wherein the preset duration is in a range from 1 microsecond to 100 milliseconds.

11. The resonant converter according to claim 1, wherein the target freewheeling path comprises a positive freewheeling path and a negative freewheeling path, and the controller is further configured to, after controlling the AC-side half-bridge circuit to operate according to the target freewheeling path corresponding to the current polarity, when detecting that the polarity of the AC-side grid changes, control the target freewheeling path to be switched from the positive freewheeling path to the negative freewheeling path, or control the target freewheeling path to be switched from the negative freewheeling path to the positive freewheeling path.
